# EUROPEAN PATENT SPECIFICATION

(11) **EP 2 870 381 B1**
(45) Date of publication and mention of the grant of the patent: **08.03.2017**
(21) Application number: 12735788.7
(22) Date of filing: 09.07.2012
(51) Int. Cl.: F16H 57/04, F16H 3/091

(54) **TRANSMISSION WITH AN OIL PUMP**
GETRIEBE MIT EINER ÖLPUMPE
TRANSMISSION POURVUE D'UNE POMPE À HUILE

(43) Date of publication of application: 13.05.2015
(73) Proprietor: Volvo Lastvagnar AB, 405 08 Göteborg (SE)
(72) Inventor: HEDMAN, Anders, SE-442 67 Marstrand (SE); NYLUND, Clas, SE-416 78 Göteborg (SE)
(74) Representative: Volvo Technology Corporation
(86) International application number: PCT/EP2012/002882
(87) International publication number: WO 2014/008902

(56) References cited:
- EP-A1- 2 325 034
- WO-A1-2009/136818
- JP-A- 7 167 261
- US-A1- 2011 252 906
- TECHNOLOGY: 'Traction Drives and Toroidal Variators Contents', [Online] 01 January 2012, XP055293045 Retrieved from the Internet: <URL:http://citenpl.internal.epo.org/wf/web /citenpl/citenpl.html?_url=file%3A%2F%2F%2F C%3A%2FUsers%2FTB51412%2FDocuments%2FThomas %2Ftechnical%2520knowledge%2FFachartikel%2F F16H%2FF16H-13%252015%2520Traction%2520Driv es%2520and%2520Toroidal%2520Variators.pdf> [retrieved on 2016-08-03]

## Description

### TECHNICAL FIELD

The present invention relates to field of transmissions and especially to the arrangement of an oil pump in a transmission with a plurality of forward and backward gear speeds.

### BACKGROUND ART

Especially for heavy road vehicles a large number of forward and backward gear speeds are required. In the reverse gear speeds the direction of rotation of some shafts of the transmission will be opposite to the direction of rotation in the forward gear speeds.

Lubrication of the gears and bearings of the transmission can be facilitated in different ways, by splashing through gearwheels partly submerged in oil or by an oil pump providing a lubrication and cooling flow to bearings and gearwheels distanced from the oil level and not reached by the splashing oil. This flow is normally directed to bearings located high above the oil level and/or not subjected to the splashing flow.

The oil pump is usually located at a low position in the transmission. Thereby, it will be close to the oil level. That reduces the suction height, which implies a lower risk for cavitation and a more reliable oil flow. Then, it is convenient to drive the pump by the countershaft or by the intermediate gearwheel in a reversing secondary gear set.

However, in combination with a reversing primary gear set, this will not function properly. When the reversing primary gear set is engaged, the countershaft will have opposite sense of rotation compared to forward driving, when an ordinary primary gear set is active. The oil pump would not provide any flow at reverse driving. This would be acceptable only for very short distances in reverse gears. A relocation of the pump would require a lot of redesign, and would often not be feasible due to space constraints.

US 2011/0252906A1 shows a solution to the problem with opposite sense of rotation in reverse gears; the pump is driven by either of two counter-rotating elements via one-way clutches. This will be rather costly, though, requiring four additional gearwheels and additional axes of rotation.

WO2009/136818A1 discloses a transmission having all features of the preamble of claim 1.

There is thus a need for an improved oil pump arrangement solving the aforementioned problems.

### SUMMARY

The object of the present invention is to provide a transmission with an oil pump, connected in a space and cost effective way and that can be driven in all forward and backward speeds of the transmission. This object is achieved by the features of the connection defined in claim 1.

The inventive transmission comprises an input shaft, a main shaft, a countershaft and an oil pump. Said input shaft, said main shaft and said countershaft are provided with gearwheels in order to enable torque transfer in a plurality of forward and backward speeds. Said oil pump is provided with a freewheel mechanism, which comprises an oil pump driveshaft, a first pump drive gearwheel and a first and a second freewheel arranged upon said oil pump driveshaft. The oil pump drive shaft is the input shaft for the pump and is constantly connected to the oil pump. The first and the second freewheel are of any suitable freewheel mechanism, which allows to transfer a torque in a first direction and freewheels in the second. Both said first and said second freewheel can transfer torque to said oil pump drive shaft in one and the same direction.

It is important that the first and the second freewheels transfer torque in one and the same direction, such that the oil pump can work one direction.

Normally a freewheel comprises an input and an output part, wherein the input part is rotational fix to a driving part and the output part is rotational fix to the driven part.

According to the invention, said first freewheel is in drive connection between said countershaft and said oil pump drive shaft and said second freewheel is in drive connection between said first pump drive gearwheel and said oil pump drive shaft. Said first pump drive gearwheel meshes with a first gearwheel coaxial with said main shaft and which first gearwheel is used in at least one of said forward or backward speeds.

The countershaft rotates in opposite direction when the transmission is in a forward gear speed relative when the transmission is in a backward gear speed. Due to the torque transfer to the oil pump drive shaft over said gearwheel mechanism, the oil pump drive shaft can be driven in one and the same direction independent of the direction of rotation of the countershaft. Further, because said first gearwheel is used in at least one of the forward and backward gear speeds, the oil pump can be driven in all forward and backward speed. By arranging the oil pump in this inventive manner, a minimum of addition gearwheels is needed in order to drive the oil pump in both forward and backward gear speeds. Due to the use of existing gearwheels to drive the oil pump a cost effective arrangement of the oil pump is achieved, whereby the oil pump still can be driven when the transmission is in a reverse gear speed.

It is preferred that said oil pump driveshaft is arranged coaxial with the countershaft and thereby the first freewheel is connected to said countershaft, i.e. the input part of the first freewheel is rotationally fixed with the countershaft and the output part of the second freewheel is rotationally fixed with the oil pump drive shaft. No additional gearwheels are thereby needed to drive the oil pump drive shaft over the countershaft.

It is further preferred that said first oil pump drive gearwheel is arranged upon the countershaft, such that it can rotate thereupon. The first oil pump drive gearwheel is further connected to the second freewheel, i.e. the input part of the second freewheel is rotationally fixed to the first oil pump drive gearwheel, and the output part of the second freewheel is rotationally fixed to the oil pump drive shaft. The oil pump drive gearwheel is thereby suitably arranged upon a bearing. The arrangement of the oil pump drive gearwheel upon the countershaft, gives the gearwheel a robust arrangement.

Said first gearwheel is preferably a loose gearwheel arranged upon an input shaft of said transmission, wherein said loose gearwheel is a reverse gearwheel upon the input shaft, and which meshes with a reverse idler gearwheel which transfers torque to said countershaft in a reverse gear speed. Said first pump drive gearwheel thereby transfers torque to the pump drive input shaft over the second freewheel when the transmission is in a reverse gear speed.

In some transmissions the oil pump is arranged on the main housing of the transmission on the output side of the transmission. To allow such an arrangement it is suggested that the countershaft is a hollow shaft and wherein the oil pump driveshaft extends within the countershaft such that said oil pump is arranged at one end of the countershaft and said freewheel mechanism is arranged at the other end of said hollow shaft. The oil pump can thereby still be driven with the inventive freewheel mechanism, and especially can the first pump drive gearwheel be driven by the reverse gearwheel upon an input shaft. The first freewheel can however be arranged on either end of countershaft.

In an alternative embodiment of the invention, the first freewheel is connected to a second pump drive gearwheel, i.e. the input part of the first freewheel is connected to the second pump drive gearwheel. The second pump drive gearwheel meshes with a second gearwheel which is provided upon said countershaft and which is used in at least one of said forward or backward gear speeds. By providing the first freewheel with the second pump drive gearwheel a higher flexibility of the arrangement of the oil pump within the transmission is achieved. The first pump drive gearwheel can thereby be driven by the first gearwheel coaxial with the main shaft and the second pump drive gearwheel can be driven by a second gearwheel which is provided upon the countershaft.

It is preferred that said first gearwheel which is coaxial with the main shaft and meshes with said first pump drive gearwheel of said second freewheel also meshes with said second gearwheel which is provided upon said countershaft and meshes with said second pump drive gearwheel. The freewheel mechanism can thereby be arranged in a compact manner. The pump can be driven according to the invention both in forward gear speeds and backward gear speeds.

Further advantages and advantageous embodiments of the invention are disclosed and illustrated in the figures with reference to the detailed description thereof.

### BRIEF DESCRIPTION OF THE DRAWINGS

The present invention will now be described in detail with reference to the schematic figures, wherein:
- Figure 1: shows a transmission according to the invention;
- Figure 2: shows a first arrangement of the oil pump according to the invention;
- Figure 3: shows a second arrangement of the oil pump according to the invention; and
- Figure 4: shows a third arrangement of the oil pump according to the invention.

### DETAILED DESCRIPTION

In the following only a limited numbers of embodiments of the invention are shown and described, simply by way of illustration of some ways of carrying out the invention.

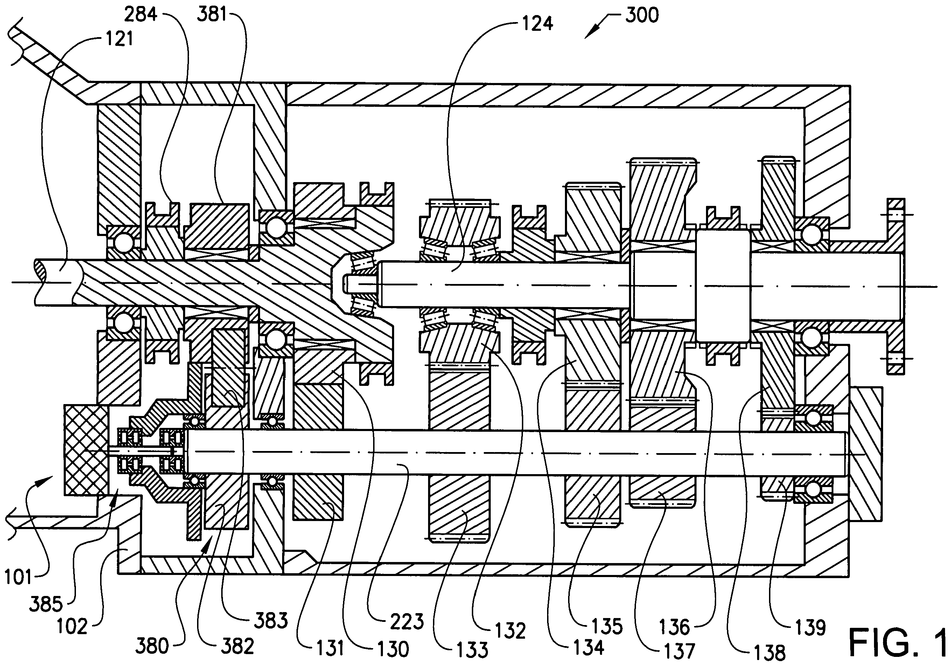

Figure 1 shows a transmission 300 according to the invention, having a freewheel mechanism 385 that enables the oil pump 101 to provide oil flow independent of the direction of rotation of the countershaft 223.

A transmission 300 is arranged inside a housing 102. There are three shafts in the transmission 300; an input shaft 121, a countershaft 223 and a main shaft 124. The input shaft 121 and the main shaft 124 are coaxial, and the countershaft 223 is arranged parallel to them. On the input shaft 121 and the main shaft 124 a number of rotatable, loose gearwheels (381, 130, 132, 134, 136, 138) are arranged. Each of these loose gearwheels (381, 130, 132, 134, 136, 138) are in mesh with a gearwheel (282, 131, 133, 135, 137, 139) that are either fixed on or integral with the countershaft 223.

The transmission 300 is provided multiple reverse gears, which are achieved by a reversing primary gear unit 380. This reversing primary gear unit 380 comprises a reversing primary loose gearwheel 381, a reversing idler gearwheel 383, a reversing primary gearwheel 282, and a reversing primary tooth clutch 284. Here, the reversing primary loose gearwheel 381 is rotatably arranged on the input shaft 121. It can selectably be rotationally locked to the input shaft 121 by the reversing primary tooth clutch 284. Furthermore, the reversing primary gearwheel 282 is rotationally fixed to the countershaft 223 and it is in mesh with the reversing idler gearwheel 383, which is also in mesh with the reversing primary loose gearwheel 381.

When the reversing primary tooth clutch 284 is engaged, reversing idler gearwheel 383 will have the opposite sense of rotation as the input shaft 221. Analogously, the reversing primary gearwheel 282 and countershaft 223 will then rotate in the same direction as the input shaft 121. A number of reverse gears can now be obtained, ranging from fast vehicle speed, intermediate vehicle speed to low vehicle speed, in which all a lubricating oil flow is needed. The general function of a transmission 300 is known and will therefore not be explained in detail.

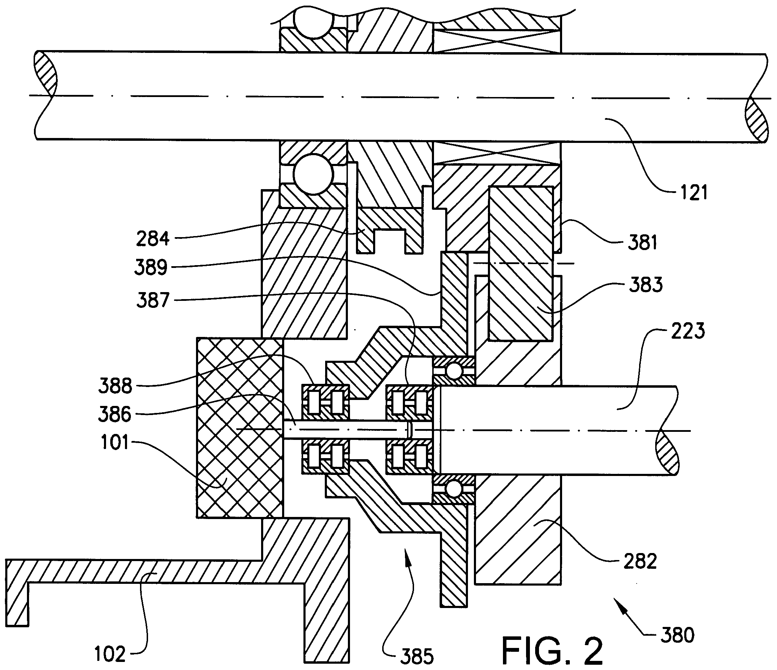

The oil pump 101 and the freewheel mechanism 385 is shown in more detail in figure 2. An oil pump drive shaft 386 is constantly connected to the oil pump 101 and coaxial with the countershaft 223. A countershaft one-way clutch 387 is arranged between the countershaft 223 and oil pump drive shaft 386. The first one-way clutch 387 allows the oil pump 101 to be driven when the countershaft 223 rotates in the direction that corresponds to forward driving of the vehicle. When the countershaft 223 rotates in the opposite direction, which corresponds to driving in reverse, the first one-way clutch 387 will freewheel with no influence on the oil pump drive shaft 386. In order to make the oil pump 101 produce an oil flow, a second one-way clutch 388 is arranged between the oil pump drive shaft 386 and a first pump drive gearwheel 389. This first pump drive gearwheel 389 is in mesh with the reversing primary loose gearwheel 381. The reversing primary loose gearwheel 381 is thereby slightly widened, in order to facilitate the gear mesh with the first pump drive gearwheel 389. The reverse pump drive gearwheel 389 is thereby in drive connection with the reversing primary gearwheel 282. The reversing primary gear wheel 282 is arranged as a loose gearwheel upon the input shaft 121 and is coaxial with the main shaft 124.

Being rotationally connected via three external gear meshes, the reverse pump drive gearwheel 389 will always rotate in the opposite direction as the countershaft 223. The oil pump 101 provides a lubricating and cooling oil flow independent of the direction of rotation of the countershaft, i.e. independent of the direction of driving.

The freewheel mechanism 385 enables a low position of the oil pump 101 along with the ability to provide a lubricating and cooling oil flow at forwards as well as reverse driving. A transmission 300 provided therewith requires just a few additional parts; the oil pump drive shaft 386, the first one-way clutch 387, the second one-way clutch 388, and the first pump drive gearwheel 389, whereby the costs for the oil pump arrangement is low. Further, the impact on overall size of the transmission is minimal, just a length increase corresponding to the width of the first pump drive gearwheel 389 is needed. This width can be made very small, since the power required to drive the oil pump 101 is very low.

Of the gearwheels used for driving the oil pump 101, only the first pump drive gearwheel 389 is not used to transfer propulsive power in at least one gear.

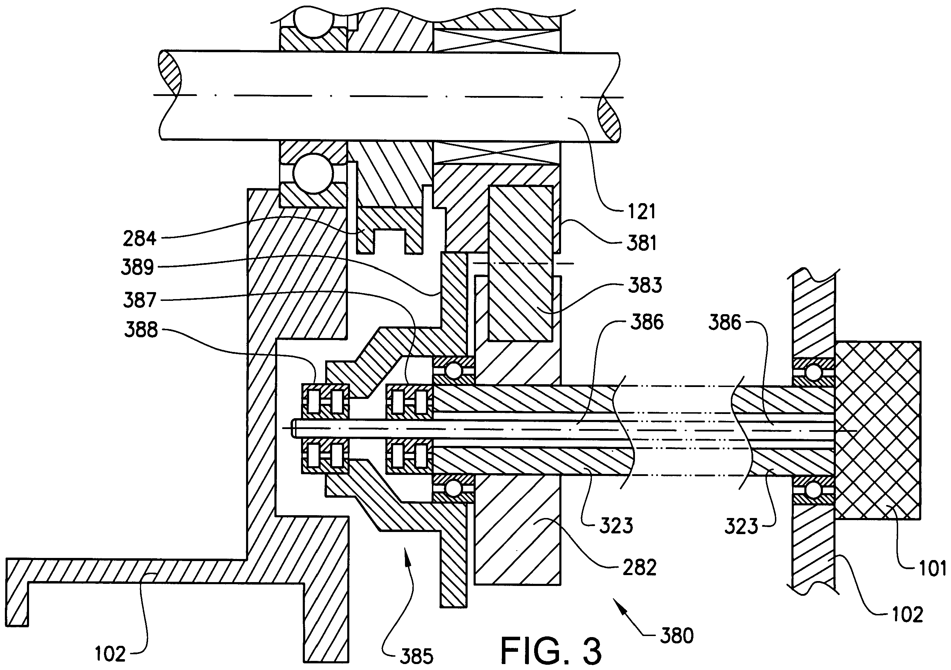

In some transmissions the oil pump is arranged on the transmission end that is opposite to the engine, input shaft and primary gear sets. Figure 3 shows an embodiment of the invention for such transmissions. Such a transmission could be similar to the transmission 300 with exception of the arrangement of the oil pump 101; therefore transmission 300 will be used as starting point. In a transmission 300 an oil pump 101 is located on main housing 102 on the output side of the transmission 300. A freewheel mechanism 385 drives the oil pump 101 via an oil pump drive shaft 386 that is arranged inside a hollow countershaft 323. The freewheel mechanism is arranged at the input side of the transmission, whereby the oil pump 101 is arranged on the output side of the transmission, wherein the oil pump drive shaft 386, is driven in the same way as in transmission 300 in figures 1 and 2. The countershaft 323 drives the oil pump drive shaft 386 via the first freewheel 387 at forward driving, and the first pump drive gearwheel 389 drives the oil pump drive shaft 386 via the second freewheel 388 in reverse gears.

A version (not shown) of the embodiment shown in figure 3, the first freewheel 387 is arranged at the output of the transmission 300 end together with the oil pump 101, wherein the second freewheel 388 is arranged as disclosed in figure 1, 2 and 3. Thereby the space needed for the freewheel mechanism 385 can be spread between the input and output side.

In the embodiments disclosed in figure 1-3, there is only one additional gearwheel (the first pump drive gearwheel 389) in order to facilitate that the oil pump 101 will provide an oil flow at forwards as well as reverse driving. This will limit the additional cost for embodying a proper lubricating and cooling oil flow that is independent of the driving direction. Moreover, first pump drive gearwheel 389 is coaxial with the oil pump drive shaft 386 and the countershaft 223, 323. Thus, no additional axes of rotation are necessary. That will limit the costs further, since no additional machining is required in main housing 102.

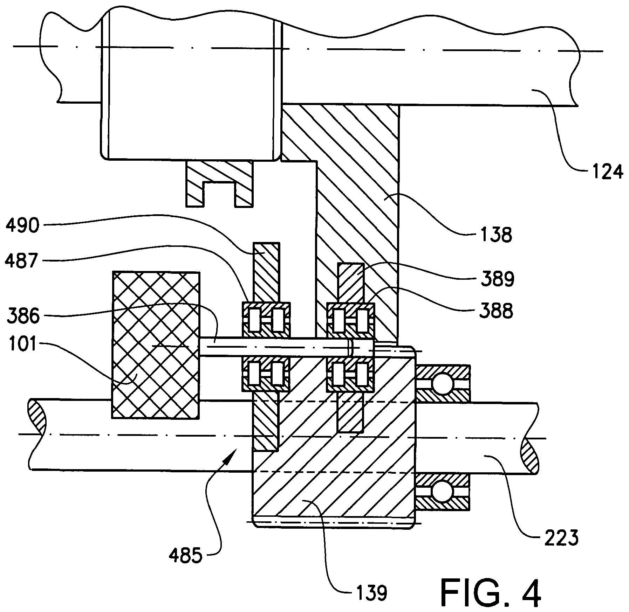

In some transmissions the oil pump is arranged at the side of a transmission and thereby normally, driven by the reverse idler 383 (disclosed in transmission 300 in figure 1 and also shown in figure 2 and 3). An embodiment of the invention facilities the arrangement of the oil pump 101 at the side of the transmission, this embodiment is disclosed in figure 4. The oil pump 101 is driven by a freewheel mechanism 485. The oil pump 101 is constantly connected to, and driven by the oil pump drive shaft 386. A first freewheel 487 is arranged between a second pump drive gearwheel 490 and the oil pump drive shaft 386. The second pump drive gearwheel 490 is in mesh with a secondary gearwheel 139 on countershaft 223. The first pump drive gearwheel 389 is coaxial with the oil pump drive shaft 386, and is in mesh with the secondary loose gearwheel 138, which is arranged upon the main shaft 124. The second freewheel 388 is arranged between the oil pump drive shaft 386 and first pump drive gearwheel 389.

The direction of rotation of the second pump drive gearwheel 490 is opposite to that of the countershaft 223, because the second pump drive gearwheel 490 meshes with the secondary gearwheel 139 on the countershaft 223. The first pump drive gearwheel 389 has the same direction of rotation as the countershaft 223, since it meshes with the secondary gearwheel 238 upon the main shaft 124, which also meshes with the secondary gearwheel 139 upon the countershaft 223. Hence, independent of the direction of rotation of the countershaft 223, the oil pump drive shaft 386 will be driven in the correct direction of rotation by either of the first or the second freewheel 487, 388. The oil pump 101 will provide an oil flow at forwards as well as reverse driving.

Depending on how the oil pump 101 and thereby the pump drive shaft 386 is arranged relative the secondary gearwheels 138, 139, one of the secondary gearwheels 138, 139 must be slightly widened in order to facilitate the gear mesh with the first respectively the second pump drive gearwheel 389, 490. In figure 4 the second pump drive gearwheel 490 meshes with the second secondary gearwheel 139 adjacent to the first secondary gearwheel 138, whereby the secondary gearwheel 139 upon the countershaft 223 is widened in order to facilitate the gear mesh between the second pump drive gearwheel 490 and the second secondary gearwheel 139.

In the embodiment disclosed in figure 4, there are only two additional gearwheels (the first and the second pump drive gearwheel 389, 490) in order to facilitate that the oil pump 101 will provide an oil flow at forwards as well as reverse driving. This will limit the additional cost for embodying a proper lubricating and cooling oil flow that is independent of the driving direction. Moreover, first pump drive gearwheel 389 and the second pump drive gearwheel 490 are coaxial with the oil pump drive shaft 386. Thus, no additional axes of rotation are necessary. That will limit the costs further, since no additional machining is required in the transmission housing.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. Transmission (300) comprising;
• an input shaft (121)
• a main shaft (124);
• a countershaft (223, 323); and
• an oil pump (101), wherein
said input shaft (121), said main shaft (124) and said countershaft (223, 323) are provided with gearwheels (381, 282, 130-139) in order to enable torque transfer in a plurality of forward and backward gear speeds, **characterized in that**
said oil pump (101) is provided with a freewheel mechanism (385, 485), which comprises an oil pump driveshaft (386), a first pump drive gearwheel (389) and a first and a second freewheel (387, 487; 388) arranged upon said oil pump driveshaft (386), wherein both said first and said second freewheel (387, 487; 388) can transfer torque to said oil pump drive shaft (386) in one and the same direction, whereby said first freewheel (387, 487) is in drive connection with said countershaft (223, 323) and said second freewheel (388) is connected to said first pump drive gearwheel (389), which meshes with a first gearwheel (381, 138) coaxial with said main shaft (124, 238) and which first gearwheel (381, 138) transfers torque in at least one of said forward or backward gear speeds.

2. Transmission (300) according to claim 1, wherein said oil pump driveshaft (386) is coaxial with said countershaft (223, 323) and said first freewheel (387) is connected to said countershaft (223, 323).

3. Transmission (300) according to claim 1 or 2, wherein said first pump drive gearwheel (389) is arranged upon said countershaft (223, 323), such that it can rotate thereupon.

4. Transmission (300) according to any one of the preceding claims, wherein said first gearwheel (381) is a loose gearwheel arranged upon an input shaft (121) of said transmission, wherein said loose gearwheel (381) is a reverse gearwheel (381) which meshes with a reverse idler gear (383) which transfers torque to said countershaft (223, 323) in a reverse gear speed.

5. Transmission (300) according to any of the preceding claims, wherein said countershaft is a hollow shaft (323) and wherein said oil pump driveshaft (386) extending within said hollow shaft (323) such that said oil pump (101) is arranged at one end of said hollow shaft (323) and at least a part of said freewheel mechanism (385) is arranged at the other end of said hollow shaft (323).

6. Transmission (300) according to claim 5, wherein said first freewheel (387) is arranged at the same end of said countershaft (323) as said oil pump (101) and said second freewheel (388) is arranged upon the opposite end of said countershaft (323).

7. Transmission (300) according to claim 1, wherein said first freewheel (487) is connected to a second pump drive gearwheel (490), wherein said second pump drive gearwheel (490) meshes with a second gearwheel (139) which is provided upon said countershaft (223) and which transfers torque in at least one of said forward or backward speeds.

8. Transmission (300) according to claim 7, wherein said first gearwheel (138) which is coaxial with the main shaft (124) and meshes with said first pump drive gearwheel (389) also meshes with said second gearwheel (139), which is provided upon said countershaft (223) and meshes with said second pump drive gearwheel (490).

## Patentansprüche

1. Getriebe (300), umfassend:
• eine Eingangswelle (121);
• eine Hauptwelle (124);
• eine Gegenwelle (223, 323); und
• eine Ölpumpe (101), wobei
die Eingangswelle (121), die Hauptantriebswelle (124) und die Gegenwelle (223, 323) mit Getrieberädern (381, 282, 130-139) versehen sind, um eine Drehmomentübertragung in einer Vielzahl von Vorwärts- und Rückwärtsgängen zu ermöglichen, **dadurch gekennzeichnet, dass** die Ölpumpe (101) mit einem Freilaufmechanismus (385, 485) versehen ist, der eine Ölpumpenantriebswelle (386), ein erstes Pumpenantriebsgetrieberad (389) und einen ersten und einen zweiten Freilauf (387, 487; 388) umfasst, die an der Ölpumpenantriebswelle (386) angeordnet sind, wobei sowohl der erste als auch der zweite Freilauf (387, 487; 388) Drehmoment auf die Ölpumpenantriebswelle (386) in ein und derselben Richtung übertragen können, wodurch der erste Freilauf (387, 487) in Antriebsverbindung mit der Gegenwelle (223, 323) steht und der zweite Freilauf (388) mit dem ersten Pumpenantriebsgetrieberad (389) verbunden ist, das mit einem ersten Getrieberad (381, 138) eingreift, das koaxial zu der Hauptantriebswelle (124, 238) ist, und das erste Getrieberad (381, 138) Drehmoment in wenigstens einem der Vorwärts- oder Rückwärtsgänge überträgt.

2. Getriebe (300) nach Anspruch 1, bei dem die Ölpumpenantriebswelle (386) koaxial zu der Gegenwelle (223, 323) ist und der erste Freilauf (387) mit der Gegenwelle (223, 323) verbunden ist.

3. Getriebe (300) nach Anspruch 1 oder 2, wobei das erste Pumpenantriebsgetrieberad (389) an der Gegenwelle (223, 323) so angeordnet ist, dass es darauf rotieren kann.

4. Getriebe (300) nach einem der vorhergehenden Ansprüche, wobei das erste Getrieberad (381) ein loses Getrieberad ist, das an einer Eingangswelle (121) des Getriebes angeordnet ist, wobei das lose Getrieberad (381) ein Rückwärtsgang-Getrieberad (381) ist, das mit einem Rücklaufrad (383) eingreift, das das Drehmoment auf die Gegenwelle (223, 323) in einem Rückwärtsgang überträgt.

5. Getriebe (300) nach einem der vorhergehenden Ansprüche, wobei die Gegenwelle eine Hohlwelle (323) ist und wobei die Ölpumpenantriebswelle (386) sich in der Hohlwelle (323) erstreckt, so dass die Ölpumpe (101) an einem Ende der Hohlwelle (323) angeordnet ist und wenigstens ein Teil des Freilaufmechanismus (385) an dem anderen Ende der Hohlwelle (323) angeordnet ist.

6. Getriebe (300) nach Anspruch 5, wobei der erste Freilauf (387) an demselben Ende der Gegenwelle (323) wie die Ölpumpe (101) angeordnet ist und der zweite Freilauf (388) an dem gegenüberliegenden Ende der Gegenwelle (323) angeordnet ist.

7. Getriebe (300) nach Anspruch 1, wobei der erste Freilauf (487) mit einem zweiten Pumpenantriebsgetrieberad (490) verbunden ist, wobei das zweite Pumpenantriebsgetrieberad (490) mit einem zweiten Getrieberad (139) eingreift, das an der Gegenwelle (223) vorgesehen ist und Drehmoment in wenigstens einem der Vorwärts- oder Rückwärtsgänge überträgt.

8. Getriebe (300) nach Anspruch 7, wobei das erste Getrieberad (138), das zu der Hauptantriebswelle (124) koaxial ist und mit dem ersten Pumpenantriebsgetrieberad (389) eingreift, auch mit dem zweiten Getrieberad (139) eingreift, das an der Gegenwelle (223) vorgesehen ist und mit dem zweiten Pumpenantriebsgetrieberad (490) eingreift.

## Revendications

1. Transmission (300) comprenant :
• un arbre d'entrée (121)
• un arbre principal (124) ;
• un arbre de renvoi (223, 323) ; et
• une pompe à huile (101), où
ledit arbre d'entrée (121), ledit arbre principal (124) et ledit arbre de renvoi (223, 323) sont pourvus de roues dentées (381, 282, 130-139) afin de permettre un transfert de couple dans une pluralité de rapports en marche avant et marche arrière, **caractérisée en ce que**
ladite pompe à huile (101) est pourvue d'un mécanisme de roue libre (385, 485), qui comprend un arbre d'entraînement de pompe à huile (386), une première roue dentée d'entraînement de pompe (389) et des première et deuxième roues libres (387, 487 ; 388) agencées sur ledit arbre d'entraînement de pompe à huile (386), où lesdites première et deuxième roues libres (387, 487 ; 388) peuvent transférer un couple audit arbre d'entraînement de pompe à huile (386) dans une seule et même direction, moyennant quoi ladite première roue libre (387, 487) est en liaison d'entraînement avec ledit arbre de renvoi (223, 323) et ladite deuxième roue libre (388) est reliée à ladite première roue dentée d'entraînement de pompe (389), qui s'engrène avec une première roue dentée (381, 138) coaxiale audit arbre principal (124, 238) et laquelle première roue dentée (381, 138) transfère le couple dans au moins l'un desdits rapports en marche avant ou en marche arrière.

2. Transmission (300) selon la revendication 1, dans laquelle ledit arbre d'entraînement de pompe à huile (386) est coaxial audit arbre de renvoi (223, 323) et ladite première roue libre (387) est reliée audit arbre de renvoi (223, 323).

3. Transmission (300) selon la revendication 1 ou 2, dans laquelle ladite première roue dentée d'entraînement de pompe (389) est agencée sur ledit arbre de renvoi (223, 323), de sorte qu'elle puisse tourner sur celui-ci.

4. Transmission (300) selon l'une quelconque des revendications précédentes, dans laquelle ladite première roue dentée (381) est une roue dentée lâche agencée sur un arbre d'entrée (121) de ladite transmission, où ladite roue dentée lâche (381) est un pignon de marche arrière (381) qui s'engrène avec un pignon inverseur (383) qui transfère le couple audit arbre de renvoi (223, 323) dans un rapport en marche arrière.

5. Transmission (300) selon l'une des revendications précédentes, dans laquelle ledit arbre de renvoi est un arbre creux (323) et dans laquelle ledit arbre d'entraînement de pompe à huile (386) s'étendant dans ledit arbre creux (323) de sorte que ladite pompe à huile (101) soit agencée au niveau d'une extrémité dudit arbre creux (323) et au moins une partie dudit mécanisme de roue libre (385) soit agencé au niveau de l'autre extrémité dudit arbre creux (323).

6. Transmission (300) selon la revendication 5, dans laquelle ladite première roue libre (387) est agencée au niveau de la même extrémité dudit arbre de renvoi (323) que ladite pompe à huile (101) et ladite deuxième roue libre (388) est agencée sur l'extrémité opposée dudit arbre de renvoi (323).

7. Transmission (300) selon la revendication 1, dans laquelle ladite première roue libre (487) est reliée à une deuxième roue dentée d'entraînement de pompe (490), où ladite deuxième roue dentée d'entraînement de pompe (490) s'engrène avec une deuxième roue dentée (139) qui est prévue sur ledit arbre de renvoi (223) et qui transfère le couple dans au moins l'un desdits rapports en marche avant ou en marche arrière.

8. Transmission (300) selon la revendication 7, dans laquelle ladite première roue dentée (138) qui est coaxiale à l'arbre principal (124) et qui s'engrène avec ladite première roue dentée d'entraînement de pompe (389) s'engrène également avec ladite deuxième roue dentée (139), qui est prévue sur ledit arbre de renvoi (223) et qui s'engrène avec ladite deuxième roue dentée d'entraînement de pompe (490).
